# FASCICULE DE BREVET EUROPEEN

(11) **EP 1 600 644 B1**
(45) Date de publication et mention de la délivrance du brevet: **01.08.2007**
(21) Numéro de dépôt: 05011090.7
(22) Date de dépôt: 23.05.2005
(51) Int. Cl.: F16B 5/04

(54) **Dispositif de freinage et procédé de fabrication**
Bremsvorrichtung und Herstellungsverfahren
Brake device and manufacturing method

(30) Priorité: 27.05.2004 FR 0405756
(43) Date de publication de la demande: 30.11.2005
(73) Titulaire: ROBERT BOSCH GMBH, 70442 Stuttgart (DE)
(72) Inventeur: Reboh, Jacques, 93320 Les Pavillons sous Bois (FR); Samson, Gwenael, 75011 Paris (FR)
(74) Mandataire: Hurwic, Aleksander Wiktor

(56) Documents cités:
- EP-A- 1 028 045
- US-A- 3 162 018
- US-A- 4 400 942
- US-A- 4 400 943

## Description

La présente invention est relative à un servomoteur pneumatique d'assistance de freinage de véhicule automobile. Elle vise un montage d'un maître cylindre sur un boîtier de servomoteur, ainsi qu'un procédé de fabrication d'un tel ensemble. Plus particulièrement, elle vise un système de fixation, du maître cylindre au boîtier.

L'invention a pour but de solidariser de manière efficace le maître cylindre et le boîtier. Un autre but de l'invention est de répartir dans un large périmètre les contraintes qui s'exercent dans la zone de fixation du maître cylindre au boîtier. L'invention a pour but supplémentaire de diminuer le nombre de pièces nécessaires à la fabrication d'un tel ensemble, ainsi que le temps de fabrication d'un servomoteur, et le prix de revient d'un servomoteur pneumatique. L'invention a également pour but de proposer un procédé de fabrication d'un tel servomoteur.

Un servomoteur pneumatique d'assistance de freinage de véhicule automobile comporte généralement un boîtier avec une paroi en tôle. Le boîtier comporte une chambre avant à volume variable, séparée d'une chambre arrière, également à volume variable, par une cloison. La cloison est formée par une membrane étanche et souple et une plaque jupe rigide. Un maître cylindre pénètre partiellement dans la chambre avant du boîtier, au moyen d'un nez de pénétration. La chambre avant, placée du côté du maître cylindre, est reliée pneumatiquement à une source de vide. La chambre arrière, opposée à la chambre avant et placée du côté d'une pédale de frein, est reliée pneumatiquement, de manière contrôlée par une valve, à une source de fluide propulseur.

Au repos, c'est-à-dire lorsqu'un conducteur n'appuie pas sur la pédale de frein, les chambres avant et arrière sont connectées entre elles. La chambre arrière est isolée par rapport à la pression atmosphérique. Lors du freinage, on isole tout d'abord la chambre avant par rapport à la chambre arrière, puis on admet de l'air dans la chambre arrière. Cette admission d'air a pour effet de propulser la cloison. La jupe rigide entraîne alors un piston pneumatique du servomoteur, qui lui-même entraîne un piston primaire du maître cylindre par l'intermédiaire d'une tige de poussée. Une force d'arrachement pouvant atteindre plus de 4000 Newtons s'exerce alors sur le maître cylindre. Il est indispensable de solidariser le maître cylindre avec le boîtier du servomoteur, pour empêcher tout mouvement du maître cylindre par rapport au boîtier.

Le boîtier a une forme générale en cylindre. Il est fermé à ses deux extrémités, respectivement par un couvercle et un fond. Le fond du boîtier n'est pas plat. Il est bombé. Tout d'abord, on a fabriqué des boîtiers de servomoteurs ayant un fond de forme générale circulaire plane. Il a ensuite été remarqué que, si la face interne plane du fond du boîtier avait une forme générale en losange, la tôle du cylindre du boîtier supportait mieux les déformations dues aux forces mises en jeu lors d'un freinage. On utilise donc désormais un cylindre ayant une face plane en losange. Une face inclinée s'étend du bord de la face plane vers une arête cylindrique du boîtier.

Généralement, on fixe le maître cylindre au boîtier par l'intermédiaire d'une bride de maître cylindre. La bride, qui s'étend perpendiculairement à un corps de maître cylindre, est accolée à la face externe du cylindre du boîtier. La liaison entre la bride et le cylindre du boîtier est assurée par un jeu de vis de fixation. Au moins une vis, généralement deux, traverse le cylindre et la bride de maître cylindre. Une tête de vis est située dans le boîtier. La vis est maintenue en position par un écrou.

Le plus souvent, un renfort de vis vient rigidifier la zone de fixation. Le renfort est intercalé entre la tête de vis et la face plane du cylindre du boîtier. Le renfort est muni d'une orifice de vis. Ce renfort a avantageusement une face plane qui est en contact avec la face plane du cylindre du boîtier, et une face inclinée qui est en contact avec la face inclinée du cylindre. Il est donc préférable que la face inclinée du renfort ait une pente égale à la pente de la face inclinée de la paroi. On obtient ainsi un contact entre le renfort et les faces internes, respectivement plane et inclinée, du cylindre.

Si la pose du renfort est automatisée, la machine de pose doit être réglée de manière très précise. De même, si la pose se fait manuellement, elle nécessite une attention particulière de l'homme. En effet, le renfort doit être placé à un emplacement lui permettant de renforcer exactement la zone du cylindre en tôle la plus soumise au travail. Un décalage, même léger, du renfort par rapport à la face interne du cylindre fait que les pentes du renfort ne coïncident plus avec celles du cylindre. Les zones soumises aux forces d'arrachement ne sont donc pas correctement renforcées. La tôle du cylindre du boîtier va travailler de manière excessive lors des freinages, et se fragiliser. Cette fragilisation conduit à une rupture de la tôle à l'endroit de la zone de fixation, et à une désolidarisation du maître cylindre.

Une fois le renfort bien disposé, on introduit la vis dans l'orifice de vis. Le serrage de la vis se fait par un écrou. Cette étape de serrage nécessite également une grande attention, afin d'éviter toute rotation du renfort, pouvant mener à un mauvais positionnement dudit renfort.

Le système actuel de fixation du maître cylindre au servomoteur nécessite donc une grande précision, et des contrôles répétés. Il en découle une perte de temps importante. Cette perte de temps se répercute sur le coût de fabrication du servomoteur.

Par ailleurs, dans un tel dispositif on utilise généralement deux vis de fixation. Les vis sont disposées à des extrémités les plus éloignées de la face interne plane en losange. Les points d'appui entre le maître cylindre et le boîtier sont uniquement localisés au niveau des tête de vis de fixation et dans le périmètre des renforts. Les contraintes qui s'exercent sur le maître cylindre sont donc concentrées dans ces zones de fixation. Il est nécessaire que la tôle du cylindre ait une épaisseur conséquente, à laquelle va s'ajouter celle des renforts, pour compenser cette mauvaise répartition des contraintes. Un servomoteur similaire est connu du document US 4.400.942 A1.

Enfin, le nombre de pièces nécessaires à la fixation (vis, renforts, écrous) explique en partie le prix de fabrication élevé d'un servomoteur.

Dans l'invention, on cherche à résoudre ces problèmes de pièces en trop grand nombre et de mauvaises répartitions des contraintes, en créant une surface d'appui, entre le maître cylindre et le boîtier de servomoteur, d'un périmètre plus important que dans l'état de la technique, tout en diminuant le nombre de pièces nécessaires à ce montage. Les étapes de vérification lors de la fixation du maître cylindre au boîtier sont également réduites.

Le principe de l'invention consiste à élargir la surface d'appui entre le maître cylindre et le cylindre du boîtier de servomoteur, de façon à ce que la quasi totalité de la face interne plane du cylindre du boîtier soit sollicitée. Les contraintes sont ainsi mieux réparties. Le servomoteur de l'invention ne nécessite pas de pièce de renfort supplémentaire.

Pour arriver à ce résultat, on monte le maître cylindre par l'intérieur du servomoteur, une bride de maître cylindre est située dans le boîtier du servomoteur. Elle est en contact avec la face interne plane du cylindre du boîtier. Ainsi le maître cylindre a une surface d'appui sur le boîtier de servomoteur sur toute la surface de sa bride. Ladite bride fait office de renfort de la face plane du cylindre.

L'invention a donc pour objet un dispositif de freinage comportant :
- un servomoteur d'axe longitudinal (X) formé par un couvercle et un cylindre définissant une enveloppe pneumatique étanche,
- un orifice central ménagé sur le cylindre du servomoteur,
- un maître cylindre comportant un corps de maître cylindre destiné à entrer partiellement dans l'enveloppe pneumatique, par l'orifice central, de manière à ce qu'un axe du maître cylindre soit coaxial à l'axe du servomoteur,
caractérisé en ce que le maître cylindre est fixé au cylindre du servomoteur par déformation plastique d'une cheminée, la cheminée bordant l'orifice central et s'étendant vers l'extérieur de l'enveloppe et pénétrant dans au moins un orifice pratiqué dans une surface extérieure du corps du maître cylindre.

Dans un exemple de réalisation préféré de l'invention, le maître cylindre comporte une bride qui s'étend radialement vers l'extérieur du corps du maître cylindre, dans un plan orthogonal à l'axe du maître cylindre. Le cylindre du servomoteur comporte une face plane qui entoure l'orifice central. La bride vient en appui sensiblement plan contre la face plane du cylindre.

L'invention a également pour objet un procédé de fabrication d'un dispositif de freinage automobile caractérisé en ce qu'il comprend les étapes
- on ménage un orifice central dans un cylindre d'un servomoteur, l'orifice central étant bordé par une cheminée ;
- on fait entrer un maître cylindre à l'intérieur du servomoteur par une extrémité ouverte du servomoteur ;
- on fait déboucher un corps du maître cylindre à l'extérieur du cylindre du servomoteur par l'orifice central du cylindre ;
- on déforme la cheminée pour faire pénétrer au moins une encoche dans un orifice usiné sur le corps du maître cylindre, afin de sertir le maître cylindre ;
- on ferme l'extrémité ouverte du servomoteur par un couvercle.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une vue en coupe générale d'un dispositif de freinage conforme à l'invention ;
- Figure 2 : un agrandissement d'une partie de la face externe de la paroi du cylindre selon un mode particulier de réalisation de l'invention.
- Figure 3 : un agrandissement d'une partie du cylindre et du maître cylindre, selon un mode particulier de réalisation de l'invention.

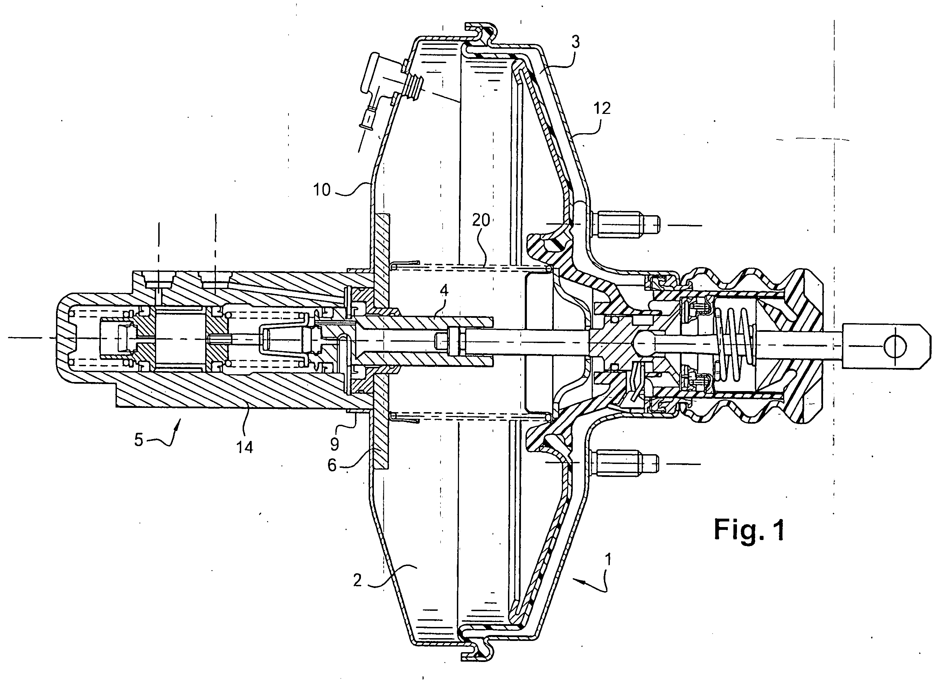

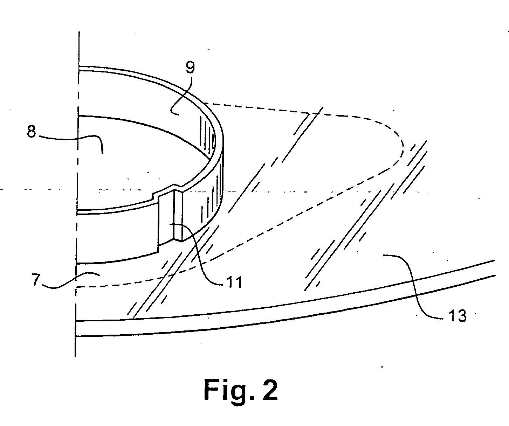

La figure 1 permet de bien visualiser le montage d'un maître cylindre par l'intérieur d'un servomoteur tel qu'il est prescrit par l'invention. Un servomoteur 1 est fermé à ses extrémités par un couvercle 12 et un cylindre 10. Le cylindre 10 comporte une face plane 7 et une face inclinée 13 (figure 2). La face inclinée 13 s'étend du bord de la face plane 7 à une arête cylindrique du cylindre 10. Le servomoteur 1 est muni d'une chambre avant 2, reliée pneumatiquement à une chambre arrière 3. On parle généralement, pour désigner l'intérieur du servomoteur, d'enveloppe pneumatique. Dans la chambre avant 2 est logé un nez de pénétration 4 d'un maître cylindre 5. Par nez de pénétration on entend partie du corps 14 du maître cylindre 5 logé à l'intérieur du servomoteur 1. Le maître cylindre 5 est muni d'une bride 6 de maître cylindre. La bride 6 est montée sur un corps 14 de maître cylindre 5 à l'endroit du nez de pénétration 4.

Sur la face 7 du cylindre 10 est ménagé un orifice 8 (figure 2), laissant passer le nez de pénétration 4 du maître cylindre 5. Ledit orifice 8 est pourvu d'une cheminée 9. La cheminée 9 peut, par exemple, être obtenue en jouant sur des propriétés plastiques d'un matériaux formant le cylindre. On découpe un cercle formant l'orifice 8, de diamètre plus petit que celui du corps 14 du maître cylindre 5, dans la tôle du cylindre 10. On vient emboutir la tôle, au niveau de cet orifice, avec une pièce d'emboutissage de diamètre sensiblement égal à un diamètre du corps 14 du maître cylindre 5. La pièce d'emboutissage va agrandir le diamètre de l'orifice 8 en créant une cheminée 9 autour de l'orifice 8. La cheminée 9 est dirigée vers l'extérieur du servomoteur 1.

Dans la présente invention, et tel que cela est représenté sur la figure 1, on se propose de monter le maître cylindre 5 par l'intérieur du servomoteur 1. La fixation du maître cylindre au servomoteur se fait sans utiliser de vis de fixation. Le maître cylindre 5 est maintenu au servomoteur 1 par sertissage du corps 14 par la cheminée 9. On diminue le nombre de pièces nécessaires à la fabrication d'un dispositif de freinage. On économise donc le temps et les matériaux nécessaires à la fabrication de ces pièces supplémentaires. On élimine dans le même temps les étapes lourdes de vérifications, nécessaires lorsque le cylindre du servomoteur est fixé au maître cylindre par des vis. Il s'en suit un gain de temps et d'argent. Le coût de fabrication d'un dispositif de freinage de l'invention est donc plus faible.

Pour sertir le maître cylindre 5 par la cheminée 9, on déforme, par exemple, la cheminée avec des couteaux (ou autres outils) afin de faire pénétrer une encoche 11 dans un orifice 15 ménagé sur le corps 14 du maître cylindre. D'une manière préférée, on répartit régulièrement et angulairement plusieurs orifices 15 sur le maître cylindre 5 afin d'obtenir un bon sertissage. On peut par exemple sertir le maître cylindre 5, par l'intermédiaire de quatre encoches 11, approximativement distantes les unes par rapport aux autres d'un angle de 90 °. Le maître cylindre 5 est ainsi sertit par la cheminée 9 dans la position voulue, à savoir avec son nez de pénétration 4 dans la chambre 3, sans changement possible.

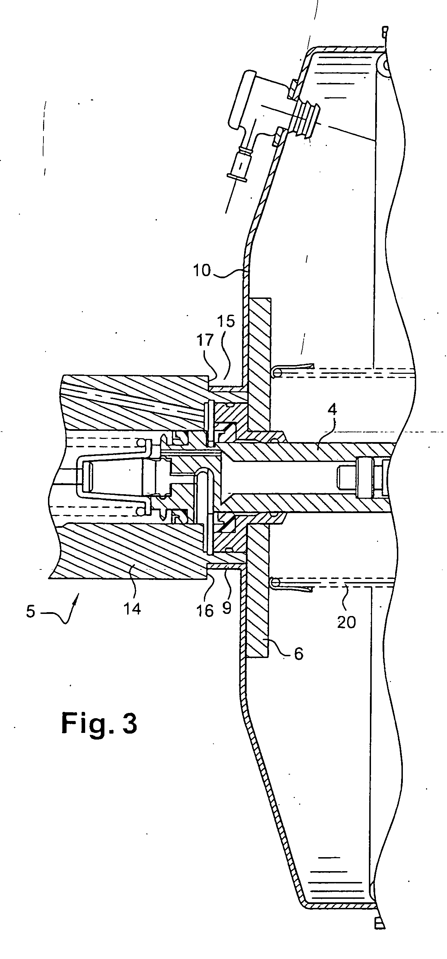

Dans un autre exemple de réalisation de l'invention, représenté sur la figure 3, le corps 14 du maître cylindre 5 n'a pas un diamètre constant sur toute sa longueur. Le maître cylindre 5 est muni d'une gorge 15. La gorge 15 est située entre la bride 6 et le corps 14 du maître cylindre.

On déforme la cheminée 9 afin de la faire pénétrer dans la gorge 15. Un rebord 16, ménagé par un décrochement entre la gorge 15 et le corps 14, peut servir d'appui à un rebord 17 de la cheminée 9. Ainsi, si le sertissage de la gorge 15 par la cheminée 9 est insuffisant, le jeu entre le maître cylindre 5 et le cylindre 10 est limité. En effet, le mouvement du maître cylindre 5 sera empêché dans un sens par la bride 6 en contact avec la face interne 7, et dans un sens opposé par les rebords 16, 17, en contact avec la cheminée 9.

Par le sertissage, réalisé grâce à la cheminée, rendant le maître cylindre solidaire du servomoteur, la bride du maître cylindre n'est pas obligatoire. La bride vient, dans les exemples représentés, renforcer la liaison entre le maître cylindre et le servomoteur. En créant un appui entre le maître cylindre et la face interne du cylindre ou permet une plus grande résistance du dispositif de freinage aux jeux et tensions auxquels il est soumis.

On utilise préférentiellement de l'acier pour fabriquer la tôle du servomoteur 1.

Dans un exemple de réalisation préféré de l'invention, la face interne plane 7 du cylindre 10 a une forme générale en losange. La bride 6 du servomoteur 5 a une surface d'appui inscrite dans la face interne plane 7 du cylindre 10. Avantageusement, la bride 6 a une forme générale en losange, de mêmes dimensions que le losange formant la face 7. Cette forme de la bride 6 permet notamment d'éviter des problèmes de mise en place de ladite bride 6 sur la face 7 du cylindre 10. On obtient par ailleurs un contact entre la bride 6 et le cylindre 10 sur toute la face plane 7.

De plus, le montage du maître cylindre 5 par l'intérieur d'un servomoteur 1 peut permettre de diminuer l'épaisseur de la bride 6, par rapport à l'épaisseur d'une bride de l'état de la technique, où le maître cylindre est monté par l'extérieur du servomoteur. La surface de contact entre le maître cylindre 5 et le cylindre 10, montés selon l'invention, est bien supérieure à celle qui existait jusqu'à présent. En effet, dans les dispositifs actuels, la surface de contact est essentiellement localisée au niveau de vis de fixation. Ces vis de fixation solidarisent le servomoteur et une bride de maître cylindre située à l'extérieur du servomoteur. Les vis sont éventuellement pourvues chacune d'un renfort local. Les contraintes sont concentrées dans un périmètre limité autour de chaque vis de fixation dans une zone restreinte de la face 7 et de la bride 6.

Dans une fabrication tel que préconisée dans l'invention, une surface de contact, entre le servomoteur 1 et le maître cylindre 5, existe sur toute la face plane 7 du cylindre 10. On obtient une meilleure répartition des contraintes, sur toute la face 7 et sur toute la bride 6. Ce n'est plus une zone limitée qui est sollicitée, mais toute la surface de la face plane 7 et toute la surface de la bride 6. On peut diminuer de façon conséquente l'épaisseur de la bride 6. Par exemple pour une tôle d'une épaisseur de 1.5mm, une bride montée à l'extérieur du servomoteur est généralement épaisse de 11 mm. La bride selon l'invention peut, elle, avoir une épaisseur comprise entre 5 et 3.5mm.

Cette diminution de l'épaisseur de la bride 6 peut également s'accompagner d'une diminution de l'épaisseur de la tôle du cylindre 10. En effet, l'épaisseur de la bride 6, même diminuée de plusieurs dixièmes de millimètres par rapport à une bride classique, vient compenser la finesse de la tôle en venant s'inscrire sur toute la surface de la face interne plane 7 du cylindre 10. Il est par exemple possible d'utiliser un cylindre 10 d'épaisseur 1mm.

Une telle diminution de la quantité de matière utilisée pour la fabrication d'un dispositif de freinage conforme à l'invention vient participer, de manière non négligeable, à la diminution de son coût de fabrication.

Dans un exemple particulier de réalisation de l'invention, on peut éventuellement disposer un joint torique (non représenté) entre le corps 14 du maître cylindre 5 et le cylindre 10 du boîtier 1. On assure ainsi une étanchéité complète de l'intérieur du servomoteur 1. Le joint torique peut, par exemple, être disposé sur une face interne de la cheminée 9. D'une manière préférée, le joint torique est en contact avec la face interne de la cheminée 9 et une partie du corps du maître cylindre 5 située dans la cheminée 9.

Sur la figure 1, sont par ailleurs représentés deux ressorts de rappels 20. Jusqu'à présent, il fallait prévoir une zone de contact entre le ressort 20 et la face interne plane 7 du cylindre lors de la disposition des vis de fixation. Il était nécessaire de prévoir un emplacement précis pour une vis de fixation et un renfort de vis, de sorte que le ressort puisse prendre appui sur le renfort. Le moindre décalage du renfort de vis empêchait le ressort 20 de rappel de prendre correctement appui sur le renfort. Un décalage du dispositif s'en suivait, risquant d'empêcher le servomoteur de jouer son rôle d'assistance de freinage.

Avec la bride 6 montée par l'intérieur du servomoteur, tel que cela est décrit dans l'invention, on a une zone de contact possible entre le ressort de rappel 20 et la bride 6 beaucoup plus grande que dans l'état de la technique. Ainsi, il n'est pas nécessaire de se préoccuper de la disposition de la bride 6 par rapport au ressort de rappel 20. Le ressort 20 a en effet dans tous les cas une zone d'appui sur la bride 6. Il en résulte un gain de temps supplémentaire lors de la fabrication.

Un tel dispositif de freinage peut être obtenu notamment par un procédé de fabrication comprenant les étapes suivantes :
- on emboutit un orifice dans une paroi d'un boîtier 1 du servomoteur, ladite paroi fermant le boîtier à une de ses extrémités et étant munie d'une face interne plane 7, vers l'extérieur du boîtier de manière à former une cheminée 9 autour de l'orifice ;
- on fait entrer un maître cylindre 5 du servomoteur à l'intérieur du boîtier par une extrémité ouverte du boîtier ;
- on fait déboucher un corps 14 du maître cylindre à l'extérieur du boîtier du servomoteur par l'orifice de la paroi du boîtier, la cheminée sertissant le corps du maître cylindre ;
- on fait reposer une bride 6 du maître cylindre sur la face interne plane de la paroi, la bride étant montée sur le corps du maître cylindre à l'endroit d'un nez de pénétration 4, et le nez de pénétration du maître cylindre restant à l'intérieur du boîtier;
- on ferme l'extrémité ouverte du boîtier du servomoteur par un couvercle 12.

Il est possible de prévoir une étape supplémentaire, avant le sertissage :
- on fait reposer une bride 6 du maître cylindre sur une face interne plane 7 du cylindre avant de sertir le maître cylindre, la bride étant formée sur un corps 14 du maître cylindre et s'étendant vers l'extérieur du corps de maître cylindre, dans un plan orthogonal à un axe du maître cylindre.

Ce procédé de fabrication permet un gain de temps important dans la fabrication d'un tel dispositif. En effet, lors du procédé de fabrication conforme à l'invention, il n'y a aucune étape de positionnement de vis et/ou de renfort, ni de serrage de vis. Il n'est pas non plus nécessaire de se préoccuper du positionnement des ressorts de rappel.

Ce gain de temps à une répercussion sur le coût total de la pièce de servomoteur. Il est plus faible que celui d'un servomoteur de l'état de la technique.

## Revendications

1. - Dispositif de freinage comportant
- un servomoteur (1) d'axe longitudinal (X) formé par un couvercle (12) et un cylindre (10) définissant une enveloppe pneumatique étanche,
- un orifice central (8) ménagé sur le cylindre (10) du servomoteur,
- un maître cylindre (5) comportant un corps (14) de maître cylindre (5) destiné à entrer partiellement dans l'enveloppe pneumatique, par l'orifice central (8), de manière à ce qu'un axe (x) du maître cylindre (5) soit coaxial à l'axe (x) du servomoteur,
**caractérisé en ce que** le maître cylindre (5) est fixé au cylindre du servomoteur par déformation plastique d'une cheminée (9), la cheminée (9) bordant l'orifice central (8) et s'étendant vers l'extérieur de l'enveloppe et pénétrant dans au moins un orifice (15) pratiqué dans une surface extérieure du corps (14) du maître cylindre.

2. - Dispositif de freinage selon la revendication 1, **caractérisé en ce que** le maître cylindre (5) comporte une bride (6) s'étendant radialement vers l'extérieur du corps (14) du maître cylindre, dans un plan orthogonal à l'axe du maître cylindre (5), **en ce que** le cylindre (10) comporte une face plane (7) entourant l'orifice central et **en ce que** la bride (6) vient en appui-sensiblement plan contre la face plane (7) du cylindre (10).

3. - Dispositif de freinage selon la revendication 2, **caractérisé en ce que** la face plane (7) du cylindre (10) a une forme générale en losange.

4. - Dispositif de freinage selon l'une des revendications 1 à 3, **caractérisé en ce que** la cheminée bordant l'orifice central pénètre dans une gorge (15) pratiquée dans la surface extérieure du corps du maître cylindre, un rebord (17) de la cheminée étant en appui contre un rebord (16) de la gorge le rebord (16) de la gorge (15) étant formé par un décrochement situé entre la gorge (15) et le corps (14) du maître cylindre (5).

5. - Dispositif de freinage selon la revendication 4 prise en combinaison avec la revendication 2, **caractérisé en ce que** la bride du maître cylindre (5) a une forme générale en losange.

6. - Procédé de fabrication d'un dispositif de freinage **caractérisé en ce qu**'il comprend les étapes :
- on ménage un orifice central (8) dans un cylindre (10) d'un servomoteur (1), l'orifice central étant bordé par une cheminée (9) ;
- on fait entrer un maître cylindre (5) à l'intérieur du servomoteur par une extrémité ouverte du servomoteur;
- on fait déboucher un corps (14) du maître cylindre à l'extérieur du cylindre du servomoteur par l'orifice central du cylindre;
- on déforme la cheminée pour faire pénétrer au moins une encoche (11) dans un orifice (15) usiné sur le corps du maître cylindre, afin de sertir le maître cylindre ;
- on ferme l'extrémité ouverte du servomoteur par un couvercle (12).

7. - Procédé de fabrication selon la revendication 6, **caractérisé en ce que**
- on fait reposer une bride (6) du maître cylindre (5) sur une face interne plane (7) du cylindre avant de sertir le maître cylindres (5), la bride étant formée sur un corps (14) du maître cylindre (5) et s'étendant vers l'extérieur du corps de maître cylindre (5) dans un plan orthogonal à un axe du maître cylindre (5).

## Claims

1. Braking device comprising
- a booster (1) of longitudinal axis (X) formed of a cover (12) and a cylinder (10) defining a sealed pneumatic envelope,
- a central orifice (8) formed on the cylinder (10) of the booster,
- a master cylinder (5) comprising a master cylinder (5) body (14) intended to partially enter the pneumatic envelope, via the central orifice (8), so that an axis (X) of the master cylinder (5) is coaxial with the axis (X) of the booster,
**characterized in that** the master cylinder (5) is fixed to the cylinder of the booster by plastic deformation of a hollow shaft (9), the hollow shaft (9) bordering the central orifice (8) and extending towards the outside of the envelope and penetrating at least one orifice (15) made in an exterior surface of the body (14) of the master cylinder.

2. Braking device according to claim 1, **characterized in that** the master cylinder (5) comprises a flange (6) extending radially towards the outside of the body (14) of the master cylinder, in a plane orthogonal to the axis of the master cylinder (5), **in that** the cylinder (10) comprises a flat face (7) surrounding the central orifice and **in that** the flange (6) bears more or less flat against the flat face (7) of the cylinder (10).

3. Braking device according to claim 2, **characterized in that** the flat face (7) of the cylinder (10) has the overall shape of a diamond.

4. Braking device according to one of claims 1 to 3, **characterized in that** the hollow shaft bordering in the exterior surface of the body of the master cylinder, a rim (17) of the hollow shaft bearing against a rim (16) of the groove (15), the rim (16) of the groove (15) being formed by a step situated between the groove (15) and the body (14) of the master cylinder (5).

5. Braking device according to claim 4 taken in combination with claim 2, **characterized in that** the flange of the master cylinder (5) has the overall shape of a diamond.

6. Method of manufacturing a braking device, **characterized in that** it comprises the following steps:
- a central orifice (8) is formed in a cylinder (10) of a booster (1), the central orifice being bordered by a hollow shaft (9);
- a master cylinder (5) is brought inside the booster via an open end of the booster;
- a body (14) of the master cylinder is made to emerge from the cylinder of the booster via the central orifice of the cylinder;
- the hollow shaft is deformed in order to cause at least one notch (11) to enter an orifice (15) machined on the body of the master cylinder, in order to crimp the master cylinder;
- the open end of the booster is closed using a cover (12).

7. Method of manufacture according to claim 6, **characterized in that**
- a flange (6) of the master cylinder (5) is made to rest on a flat internal face (7) of the cylinder before crimping the master cylinder (5), the flange being formed on a body (14) of the master cylinder (5) and extending towards the outside of the body of the master cylinder (5) in a plane orthogonal to an axis of the master cylinder (5).

## Patentansprüche

1. Bremsvorrichtung mit
- einem Servomotor (1) mit einer Längsachse (X), der durch eine Abdeckung (12) und einen Zylinder (10) gebildet ist, die eine dichte pneumatische Umhüllung begrenzen,
- einer mittleren Öffnung (8), die am Zylinder (10) des Servomotors ausgebildet ist,
- einem Hauptzylinder (5), der einen Körper (14) des Hauptzylinders (5) aufweist, der dazu vorgesehen ist, über die mittlere Öffnung (8) teilweise in die pneumatische Umhüllung einzudringen, so dass eine Achse (X) des Hauptzylinders (5) koaxial zur Achse (X) des Servomotors verläuft,
**dadurch gekennzeichnet, dass** der Hauptzylinder (5) durch die plastische Verformung eines Schachts (9) am Zylinder des Servomotors befestigt ist, wobei der Schacht (9) die mittlere Öffnung (8) umrandet, sich zum Äußeren der Umhüllung erstreckt und in mindestens eine Öffnung (15) eindringt, die an einer Außenfläche des Körpers (14) des Hauptzylinders ausgebildet ist.

2. Bremsvorrichtung nach Anspruch 1, **dadurch gekennzeichnet, dass** der Hauptzylinder (5) einen Bügel (6) aufweist, der sich in einer zur Achse des Hauptzylinders (5) orthogonalen Ebene radial zum Äußeren des Körpers (14) des Hauptzylinders erstreckt, dass der Zylinder (10) eine ebene Fläche (7) aufweist, die die mittlere Öffnung umgibt, und dass der Bügel (6) im Wesentlichen flach an die ebene Fläche (7) des Zylinders (10) in Anlage gelangt.

3. Bremsvorrichtung nach Anspruch 2, **dadurch gekennzeichnet, dass** die ebene Fläche (7) des Zylinders (10) im Allgemeinen rautenförmig ist.

4. Bremsvorrichtung nach einem der Ansprüche 1 bis 3, **dadurch gekennzeichnet, dass** der die mittlere Öffnung umrandende Schacht in eine Nut (15) eindringt, die an der Außenfläche des Körpers des Hauptzylinders ausgebildet ist, wobei ein Rand (17) des Schachts an einem Rand (16) der Nut anliegt und der Rand (16) der Nut (15) durch einen Absatz gebildet ist, der zwischen der Nut (15) und dem Körper (14) des Hauptzylinders (5) angeordnet ist.

5. Bremsvorrichtung nach Anspruch 4, in Kombination mit Anspruch 2, **dadurch gekennzeichnet, dass** der Bügel des Hauptzylinders (5) im Allgemeinen rautenförmig ist.

6. Verfahren zur Herstellung einer Bremsvorrichtung, **dadurch gekennzeichnet, dass** es die Schritte umfasst, bei denen:
- eine mittlere Öffnung (8) in einem Zylinder (10) eines Servomotors (1) ausgebildet wird, wobei die mittlere Öffnung von einem Schacht (9) umrandet wird;
- ein Hauptzylinder (5) über ein offenes Ende des Servomotors in den Servomotor eingefügt wird;
- ein Körper (14) des Hauptzylinders so angeordnet wird, dass er über die mittlere Öffnung des Zylinders zum Äußeren des Zylinders des Servomotors ausmündet;
- der Schacht verformt wird, damit mindestens eine Einkerbung (11) in eine am Körper des Hauptzylinders gebildete Öffnung (15) eindringt, um den Hauptzylinder zu verstemmen;
- das offene Ende des Servomotors durch eine Abdeckung (12) verschlossen wird.

7. Herstellungsverfahren nach Anspruch 6, **dadurch gekennzeichnet, dass**
- ein Bügel (6) des Hauptzylinders (5) vor dem Verstemmen des Hauptzylinders (5) in Anlage an eine ebene Innenfläche (7) des Zylinders gebracht wird, wobei der Bügel an einem Körper (14) des Hauptzylinders (5) gebildet ist und sich in einer zu einer Achse des Hauptzylinders (5) orthogonalen Ebene zum Äußeren des Körpers des Hauptzylinders (5) erstreckt.
